# EUROPEAN PATENT APPLICATION

(11) **EP 2 081 011 A1**
(43) Date of publication of application: **22.07.2009**
(21) Application number: 07807764.1
(22) Date of filing: 21.09.2007
(51) Int. Cl.: G01N 21/27

(54) **BIOSENSOR DEVICE**

(30) Priority: 29.09.2006 JP 2006267353
(71) Applicant: Fujifilm Corporation, Tokyo 106-8620 (JP)
(72) Inventor: OGURA, Nobuhiko, Kanagawa 258-0023 (JP)
(74) Representative: Klunker . Schmitt-Nilson . Hirsch
(86) International application number: PCT/JP2007/068433
(87) International publication number: WO 2008/041524

(57) **Abstract**

Improving processing power of a biosensor detection apparatus for measurement while preventing structural complication and size increase in the apparatus. Providing one or more spectrometers (20) configured to spectrally separate each light beam (Lr) reflected from each of a plurality of measurement regions defined on a biosensor (10) simultaneously and one or more optical receivers (30) configured to receive each light beam (Ls) spectrally separated by the one or more spectrometers (20) simultaneously, thereby enabling the apparatus to obtain a spectral intensity distribution of each light beam (Ls) separately.

## Description

### BACKGROUND OF THE INVENTION

### Field of the Invention

The present invention generally relates to a biosensor detection apparatus, and more particularly to a biosensor detection apparatus for obtaining a spectral intensity distribution of a light beam reflected from a biosensor.

### Description of the Related Art

Studies have been conducted for investigating the interaction between a specific protein and a compound of candidate medicine. Further, devices for quantitatively measuring the interaction have also been known. As one of the sensors used in such devices, for example, a biosensor is known, which allows quantification of the interaction between a specific protein and each of different compounds simultaneously. Such a biosensor includes, for example, a substrate layer, a two-dimensional grating layer stacked on the substrate layer, a specific bonding substance immobilized on the surface of the two-dimensional grating layer, and the like. The cross-section of the grating layer has aperiodic repetitive pattern, such as rectangular waveform shape, sine waveform shape, or the like.

A microtiter plate having a multitude of openings is stacked on the biosensor, and each region on the biosensor def ined by each opening of the microtiter plate is used as a measurement region in which the interaction between compounds (for example, between the specific protein and compound described above) takes place. Then, white light is emitted to the measurement region and a measurement target light beam reflected from the measurement region illuminated with the white light is spectrally analyzed, whereby the state of interaction between the compounds is quantified.

That is, the peak wavelength in the spectral intensity distribution of the light beam reflected from the measurement region shifts according to the state of interaction between the compounds, so that the state of interaction between the compounds can be quantified by measuring the shift amount of the peak wavelength.

According to the measurement using a biosensor reaction vessel having a multitude of measurement regions defined by stacking the microtiter plate having a multitude of openings described above, it is possible to quantitatively analyze each of several thousands of interactions taking place simultaneously on the biosensor.

Further, as the device for performing quantification for a multitude of measurement regions described above, a biosensor detection apparatus having 8 measurement channels is known as described, for example, in U.S. Patent No. 7,023,544. The biosensor detection apparatus includes a biosensor reaction vessel having measurement regions arranged in 8 rows by 12 columns, and the interaction between compounds taking place in each measurement region is quantified. In the apparatus, 8 measurement regions in the 1^{st} column of each row of the biosensor reaction vessel are measured simultaneously through the 8 measurement channels, and then the measurement is sequentially performed for the 2^{nd} to 12^{th} columns using the 8 measurement channels.

The biosensor detection apparatus described above includes, for each measurement channel, a spectral measurement unit having an illumination optical fiber for emitting white light, i.e., illumination light, to each measurement region, a detection optical fiber for guiding each light beam reflected from each measurement region illuminated with the white light, a spectrometer for spectrally separating the light beam outputted from the detection optical fiber, and an optical receiver for measuring the spectral intensity distribution of the spectrally separated light beam. The measurement using the 8 channels (using 8 spectral measurement units) is sequentially performed from the 1^{st} to 12^{th} columns, whereby all of the measurement regions of the biosensor are measured. The relative movement between the biosensor and spectral measurement units for sequentially measuring the 1^{st} to 12^{th} columns is implemented mechanically.

In the mean time, with the recent advancement in biotechnology, the demand for shorter quantification time for the interaction between each of a great number of compounds, i.e., enhanced processing power for the quantitative measurement is growing. For example, in order to enhance the processing power of the 8-channel biosensor detection apparatus for the quantitative measurement, it is conceivable to increase the number of channels or channel scanning speed. If the number of channels for the biosensor detection apparatus is increased, however, the number of spectrometers is also increased in proportion to the increased number of channels. When the channel scanning speed is increased, the load on the scanning mechanism is also increased according to the speeding-up level. Therefore, enhancement of processing power for the apparatus will result in complicated structure and increased size.

The present invention has been developed in view of the circumstances described above, and it is an object of the present invention to provide a biosensor detection apparatus capable of providing increased processing power for the measurement while preventing structural complication and size increase in the apparatus.

### SUMMARY OF THE INVENTION

A biosensor detection apparatus of the present invention is an apparatus including:
one or more spectrometers configured to spectrally separate each light beam reflected from each of a plurality of measurement regions defined on a biosensor simultaneously; and
one or more optical receivers configured to receive each light beam spectrally separated by the one or more spectrometers simultaneously and to obtain a spectral intensity distribution of each light beam separately.

The one or more spectrometers may be constituted by one diffraction grating. The diffraction grating is also referred to as simply "grating".

The one or more optical receivers may be constituted by one substrate on which a multitude of light receiving elements is disposed two-dimensionally.

The biosensor detection apparatus may further includes detection optical fibers, each for separately receiving each reflected light beam at one end and guiding the light beam to the one or more spectrometers.

The apparatus may include one spectrometer and one optical receiver described above.

According to the biosensor detection apparatus of the present invention, the apparatus includes one or more spectrometers configured to spectrally separate each light beam reflected from each of a plurality of measurement regions defined on a biosensor simultaneously, and one or more optical receivers configured to receive each light beam spectrally separated by the one or more spectrometers simultaneously and to obtain a spectral intensity distribution of each light beam separately. This allows the measurement without requiring separate spectrometers, each corresponding to each measurement region and separate optical receivers, each corresponding to each spectrometer as in the conventional biosensor detection apparatus, whereby the number of spectrometers and the number of optical receivers to be provided in the apparatus may be reduced.

Further, each light beam reflected from each of a plurality of measurement regions on the biosensor is spectrally separated simultaneously by the one or more spectrometers, and each light beam spectrally separated by the one or more spectrometers is received simultaneously by the one or more optical receivers and a spectral intensity distribution of each light beam is obtained separately. This allows the interaction between compounds occurred in each of all measurement regions to be quantified without relatively moving the spectrometers and biosensor as in the conventional biosensor detection apparatus. This may eliminate the mechanism employed in the conventional biosensor detection apparatus for relatively moving the spectral measurement unit constituted by spectrometers and optical receivers and the biosensor. Consequently, the time required for the relative movement may also be eliminated, so that the number of measurement regions processed per unit time may be increased.

Because of the advantageous effects described above, the biosensor detection apparatus described above may provide increased processing power for the measurement while preventing structural complication and size increase in the apparatus.

Further, if the one or more spectrometers are constituted by one diffraction grating, the structural complication and size increase may be definitely prevented.

Still further, if the one or more optical receivers are constituted by one substrate on which a multitude of light receiving elements is disposed two-dimensionally, the structural complication and size increase may be definitely prevented.

Further, where the apparatus further includes detection optical fibers, each for separately receiving each reflected light beam at one end and guiding the light beam to the one or more spectrometers, each light beam reflected from each measurement region may be reliably guided to the spectrometers, and further may prevent the degradation of S/N ratio due to mixing of light beams reflected from each measurement region, which allows more accurate quantification.

Still further, if the apparatus includes one spectrometer and one optical receiver described above, the structural complication and size increase may be further prevented.

### BRIEF DESCRIPTION OF THE DRAWINGS

Figure 1 is a conceptual diagram of a biosensor detection apparatus according to an embodiment of the present invention, illustrating the schematic configuration thereof.
Figure 2 is a conceptual diagram of a modification example of the biosensor detection apparatus according to the embodiment of the present invention, illustrating the schematic configuration thereof.

### DESCRIPTION OF THE PREFERRED EMBODIMENTS

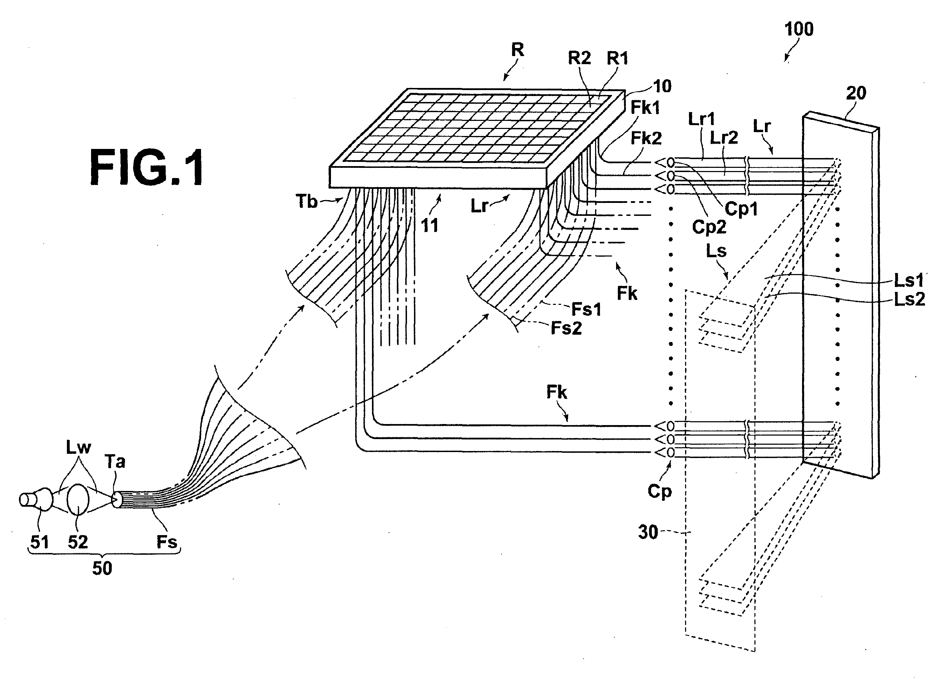

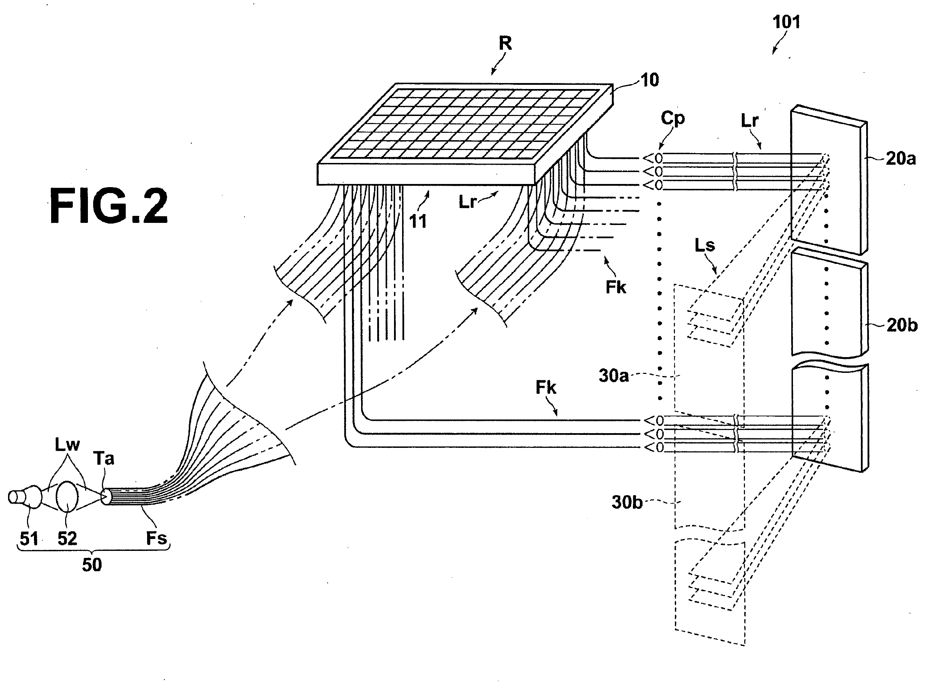

Hereinafter, embodiments of the present invention will be described with reference to the accompanying drawings. Figure 1 is a conceptual diagram of a biosensor detection apparatus according to an embodiment of the present invention, illustrating the schematic configuration thereof. Figure 2 is a conceptual diagram of a modification example of the biosensor detection apparatus described above, illustrating the schematic configuration thereof.

Biosensor detection apparatus 100 according to an embodiment of the present invention shown in Figure 1 includes one spectrometer 20 configured to spectrally separate each of light beams Lr1, Lr2, ----- (also, collectively referred to as "light beams Lr") reflected from each of measurement regions R1, R2, ----- (also, collectively referred to as "measurement regions R") defined on biosensor 10 simultaneously, and one optical receiver 30 configured to receive each of light beams Ls1, Ls2, ----- (also, collectively referred to as "light beams Ls") simultaneously and to obtain a spectral intensity distribution of each light beam separately.

Biosensor detection apparatus 100 further includes, between biosensor 10 and spectrometer 20, detection optical fibers Fk1, Fk2, ----- (also, collectively referred to as "detection optical fibers Fk"), each for separately receiving each of light beams Lr1, Lr2, ----- reflected from lower surface 11 of each of measurement regions R1, R2, ----- illuminated with white light Lw at one end and guiding each of light beams Lr1, Lr2, ----- to spectrometer 2 0, and collimator lenses Cp1, Cp2, ----- (also, collectively referred to as "collimator lenses Cp"), each provided for each of detection optical fibers Fk1, Fk2, ----- for collimating and outputting each of light beams Lr1, Lr2, ----- outputted from each of detection optical fibers Fk1, Fk2, ----- to a predetermined area of spectrometer 20.

Biosensor detection apparatus 100 further includes illumination system 50 having light source 51 for emitting white light Lw, i.e., illumination light, condenser lens 52 for condensing white light Lw emitted from light source 51, and illumination optical fibers Fs1, Fs2, -----, each for illuminating each of measurement regions R1, R2, ----- from the side of lower surface 11 by receiving white light Lw condensed by condenser lens 52 at first end Ta, propagating white light Lw to second end Tb, and emitting white light Lw from second end Tb toward each of measurement regions R1, R2, -----.

Here, spectrometer 20 is an elongated diffraction grating, and spectrally separates each of a plurality of inputted light beams simultaneously and outputs each of spectrally separated light beams to a different area of optical receiver 30. Note that spectrometer 20 is not limited to the diffraction grating type and the other type, such as prism type or the like may be used.

It is also noted that two or more spectrometers 20a, 20b,may be provided, as described later, instead of one spectrometer 20.

As for optical receiver 30, an optical receiver having a multitude of light receiving elements disposed two-dimensionally on one substrate may be used. Here, a two-dimensional CCD array is used as optical receiver 30. Optical receiver 30 receives each light beam spectrally separated by spectrometer 20 and obtains a light amount distribution of the light beam from the position of each light receiving element and a light amount received by each light receiving element. This light amount distribution corresponds to the spectral intensity distribution. That is, the position of each light receiving element that receives the spectrally separated light beam corresponds to each wavelength and the light amount received by each light receiving element represents the light intensity of each wavelength, so that the spectral intensity distribution of the spectrally separated light beam can be obtained from the light amount distribution.

It is noted that two or more optical receivers 30a, 30b,may be provided, as described later, instead of one optical receiver 30.

Biosensor 10 basically includes a one-dimensional grating layer with a high refractive index material, a low refractive index material layer, having a lower refractive index than that of the high refractive index material, for supporting the one-dimensional grating, and one or more specific bonding substances immobilized on the surface of the one-dimensional grating on the side opposite to the low refractive index material layer. Here, biosensor 10 has 96 measurement regions in total, arranged in 8 rows by 12 columns, that is, biosensor 10 has a standardized 96-well format, but the other format, such as 384-well format, 1156-well format, or the like may be used. Each of the measurement regions of biosensor 10 may be defined by any known method, such as stacking a microtiter plate having a multitude of openings on biosensor 10.

Biosensor 10 has an identical structure to that of the biosensor described in U.S. Patent No. 7,023,544.

As described above, biosensor 10 having 96 measurement regions in total, arranged in 8 rows by 12 columns, is used. Accordingly, Biosensor detection apparatus 100 includes 96 illumination optical fibers Fs, 96 detection optical fibers Fk, and 96 collimator lenses Cp.

The elongated diffraction grating, spectrometer 20, has 96 different areas thereon for spectrally separating different light beams, and spectrally separated 96 light beams Ls1, Ls2,simultaneously by spectrometer 20 are received at 96 different areas on the two-dimensional CCD array, i.e., optical receiver 30, simultaneously.

An operation of the embodiment using biosensor detection apparatus 100 will now be described.

Each light beam of white light Lw outputted from illumination system 50 through each of illumination optical fibers Fs illuminates each of measurement regions R separately and simultaneously from the side of lower surface 11. Each of light beams Lr reflected from each of measurement regions R illuminated with white light Lw is inputted to spectrometer 20 simultaneously through each of detection optical fibers Fk and each of collimator lenses Cp. Each of light beams Ls spectrally separated by spectrometer 20 is inputted to optical receiver simultaneously and the spectral intensity distribution of each of light beams Ls is obtained by optical receiver 30.

If an interaction occurs, for example, between a protein and a compound in each of measurement regions R, the peak wavelength in the spectral intensity distribution of each light beam reflected from each of measurement regions R shifts according to the state of interaction, so that the interaction may be quantified by measuring the shift amount of the peak wavelength.

In this way, the state of interaction of each of all measurement regions R may be quantified simultaneously.

As described above, according to the present invention, the processing power for the measurement of the apparatus may be increased while preventing structural complication and size increase in the apparatus.

For an individual operation in which one of the measurement regions of biosensor 10 in the embodiment described above is measured, refer to U.S. Patent No. 7,023,544.

Figure 2 illustrates a modification example of biosensor detection apparatus 100. In Figure 2, components identical to those in Figure 1 are given the same reference symbols and will not be elaborated upon further here.

Biosensor detection apparatus 101 shown in Figure 2 includes two or more spectrometers 20a, 20b, -----, instead of one spectrometer 20, and light beams Lr reflected from respective measurement regions R are spectrally separated simultaneously using two or more spectrometers 20a, 20b, -----. Further, biosensor detection apparatus 101 includes two or more optical receivers 30a, 30b, -----, instead of one optical receiver 30, and light beams Ls spectrally separated by spectrometers 20a, 20b, ----- are received by two or more optical receivers 30a, 30b, ----- simultaneously to obtain spectral intensity distributions of light beams Ls individually. Other structures and operations are identical to those of biosensor detection apparatus 100.

Further, a configuration may be adopted in which light beams Ls spectrally separated by one spectrometer 20 shown in Figure 1 are received simultaneously by two or more optical receivers 30a, 30b, -----, or light beams Ls spectrally separated by two or more spectrometers 20a, 20b, ----- shown in Figure 2 are received simultaneously by one optical receiver 30 shown in Figure 1.

## Claims

1. A biosensor detection apparatus comprising:
one or more spectrometers configured to spectrally separate each light beam reflected from each of a plurality of measurement regions defined on a biosensor simultaneously; and
one or more optical receivers configured to receive each light beam spectrally separated by the one or more spectrometers simultaneously and to obtain a spectral intensity distribution of each light beam separately.

2. The biosensor detection apparatus of claim 1, **characterized in that** the one or more spectrometers comprise one diffraction grating.

3. The biosensor detection apparatus of claim 1 or 2, **characterized in that** the one or more optical receivers comprise one substrate on which a multitude of light receiving elements is disposed two-dimensionally.

4. The biosensor detection apparatus of any one of claims 1 to 3, further comprising detection optical fibers, each for separately receiving each reflected light beam at one end and guiding the light beam to the one or more spectrometers.

5. The biosensor detection apparatus of any one of claims 1 to 4, **characterized in that** the apparatus comprises the one spectrometer and the one optical receiver.
